# EUROPEAN PATENT APPLICATION

(11) **EP 2 611 003 A2**
(43) Date of publication of application: **03.07.2013**
(21) Application number: 12199630.0
(22) Date of filing: 28.12.2012
(51) Int. Cl.: H02K 1/27

(54) **Multi-Grade Magnet For An Electric Machine**

(30) Priority: 28.12.2011 US 201161580841 P
(71) Applicant: Remy Technologies, LLC, Pendleton, IN 46064 (US)
(72) Inventor: Chamberlin, Bradley D., Pendleton, IN 46064 (US); Hamer, Colin J., Noblesville, IN 46060 (US)
(74) Representative: Roberts, Peter David

(57) **Abstract**

Apparatus and methods for improved performance of electric machines, including internal permanent magnet electric machines. In some embodiments there are multiple pairs of permanent magnets (74, 76). Each magnet pair is fabricated from a different material, one of the materials being selected to have improved high temperature magnetic characteristics, and the second material, in some embodiments, being selected for having improved magnet characteristics at lower temperatures even if with lesser magnetic characteristics at the higher temperatures than the other material.

## Description

### CROSS REFERENCE TO RELATED APPLICATION

This application claims the benefit of priority to U.S. Provisional Patent Application Serial No. 61/580,841, filed December 28, 2011, incorporated herein by reference.

### FIELD OF THE INVENTION

Various embodiments of the current invention pertain to the selection of materials for permanent magnets used in electrical machines, and more specifically to the use of multiple configurations of permanent magnets used in an internal permanent magnet (IPM) machine or a surface mounted permanent magnet (SPM) machine.

### BACKGROUND OF THE INVENTION

In high power IPM electric machines "Rare Earth" materials are used to improve performance. The raw materials for these are very expensive and also offer varying temperature performance compromises.

A rotor within an IPM machine utilizing high performance magnets may not be able to perform at the temperatures produced at the required continuous power levels. Hence a compromise can be made between peak available power and demagnetization protection. Currently one has to choose a magnet that can withstand high temperature, with a reduction in peak available power, or a magnet that has high peak power, but with a reduction in continuous temperature. Also the higher temperature capable magnets are more expensive.

Various embodiments of the inventions discussed herein address these aspects of IPM machines in novel and nonobvious ways.

### SUMMARY OF THE INVENTION

One aspect of some embodiments of the present invention pertains to an internal permanent magnet motor. In some embodiments the motor has different sizes and configurations of permanent magnets, and uses multiple types of materials for the magnets.

One aspect of the present invention pertains to a permanent magnet motor. The rotor has an outer diameter and a plurality of permanent magnet pairs, each magnet of each a pair having first and second regions with different magnetic material characteristics. Yet other embodiments include a first region having a first demagnetization knee at a first flux density and a predetermined temperature, a second region having a second demagnetization knee at a second flux density and the same predetermined temperature, and the first flux density is less than the second flux density.

Another aspect of the present invention pertains to a permanent magnet motor. Some embodiments include a stator including a plurality of electrical conductors capable of carrying a predetermined electrical current. Other embodiments include a rotor rotatable within the inner diameter of the stator, the rotor including a plurality of permanent magnet pairs, each having a first region comprising a first material and a second region comprising a second material. Yet other embodiments include the first region having a first magnetic flux density at the predetermined stator current, and the second region having a second magnetic flux density at the same predetermined stator current. Still other embodiments include the first material having a first demagnetization flux density at a predetermined temperature, and the second material having a second demagnetization flux density at the predetermined temperature, wherein the first magnetic flux density is less than second demagnetization flux density and the second magnetic flux density is greater than the second demagnetization flux density.

Another embodiment includes a rotor having an outer diameter, and a first plurality of permanent magnets fabricated from a first material and a second plurality of permanent magnets fabricated from a second different material. In yet another embodiment the first material has a first demagnetization knee at a first flux density, and the second material has a second demagnetization knee at a second flux density. Still other embodiments include each of the first plurality of magnets having a first mass; each of the second plurality of magnets having a second mass, wherein the first mass is less than the second mass, and the first flux density is less than the second flux density.

Another aspect of the present invention pertains to an internal permanent magnet motor. Some embodiments include a stator including a plurality of electrical conductors capable of carrying a predetermined electrical current. Other embodiments include a rotor rotatably supported within the stator, the rotor including a first plurality of permanent magnets fabricated from a first material and a second plurality of permanent magnets fabricated from a second different material. In yet other embodiments, the first plurality have a first magnetic flux density at the predetermined stator current, and the second plurality have a second magnetic flux density at the same predetermined stator current. In still other embodiments, the first material has a first demagnetization flux at the first flux density and the second material has a second demagnetization flux at the second flux density; wherein the first flux density is less than the second demagnetization flux and the second flux density is greater than the second demagnetization flux.

It will be appreciated that the various apparatus and methods described in this summary section, as well as elsewhere in this application, can be expressed as a large number of different combinations and subcombinations. All such useful, novel, and inventive combinations and subcombinations are contemplated herein, it being recognized that the explicit expression of each of these combinations is unnecessary.

### BRIEF DESCRIPTION OF THE DRAWINGS

Some of the figures shown herein may include dimensions. Further, some of the figures shown herein may have been created from scaled drawings or from photographs that are scalable. It is understood that such dimensions, or the relative scaling within a figure, are by way of example, and not to be construed as limiting.
FIG. 1 is a perspective view of a motor assembly according to one embodiment of the present invention.
FIG. 2 is a side view of the apparatus of FIG. 1.
FIG. 3A is an exploded view of the rotor and stator of FIG. 2.
FIG. 3B is a side perspective view of the rotor and stator of FIG. 2.
FIG. 4A is an enlargement of a cross sectional portion of the assembled rotor and stator of FIG. 2.
FIG. 4B is an enlargement of a portion of the apparatus of FIG. 4A.
FIG. 5A is a perspective view of a pair of coated magnet assemblies according to one embodiment of the present invention.
FIG. 5B is a view of the assembly of FIG. 5A without the coating.
FIG. 5C is an end view of the assembly of FIG. 5B.
FIG. 6A is a portion of a cross section of a rotor and stator according to another embodiment of the present invention.
FIG. 6B is a portion of a cross section of a rotor and stator according to another embodiment of the present invention.
FIG. 6C is a portion of a cross section of a rotor and stator according to another embodiment of the present invention.
FIG. 6D is a portion of a cross section of a rotor and stator according to another embodiment of the present invention.
FIG. 6E is a portion of a cross section of a rotor and stator according to another embodiment of the present invention.
FIG. 7 is a graphical representation of a magnetization curve of a material according to one embodiment of the present invention, as a function of temperature.
FIG. 8 is a graphical representation of the demagnetization break points of FIG. 7 as a function of magnet temperature for several different materials.
FIG. 9 is a graphical representation of the normal component of magnet surface flux density as a function of current for a particular material, as shown at a plurality of different temperatures.
FIG. 10 is a graphical representation of the normal component of magnet surface flux density as a function of current for a different material, as shown at a plurality of different temperatures.
FIGS. 11A-11H are schematic representations of permanent magnets according to various embodiments of the present invention. Each of these separate letter designations are arranged showing endview-sideview-endview in orthogonal relationship, with FIG. 11A showing an additional sideview.
FIG. 12 is a portion of a cross section of a rotor and stator according to another embodiment of the present invention.
FIG. 13 is a portion of a cross section of a rotor and stator according to another embodiment of the present invention.

### DESCRIPTION OF THE PREFERRED EMBODIMENT

For the purposes of promoting an understanding of the principles of the invention, reference will now be made to the embodiments illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates. At least one embodiment of the present invention will be described and shown, and this application may show and/or describe other embodiments of the present invention. It is understood that any reference to "the invention" is a reference to an embodiment of a family of inventions, with no single embodiment including an apparatus, process, or composition that should be included in all embodiments, unless otherwise stated. Further, although there may be discussion with regards to "advantages" provided by some embodiments of the present invention, it is understood that yet other embodiments may not include those same advantages, or may include yet different advantages. Any advantages described herein are not to be construed as limiting to any of the claims. The usage of words indicating preference, such as "preferably," refers to features and aspects that are present in at least one embodiment, but which are optional for some embodiments.

The use of an N-series prefix for an element number (NXX.XX) refers to an element that is the same as the non-prefixed element (XX.XX), except as shown and described thereafter. As an example, an element 1020.1 would be the same as element 20.1, except for those different features of element 1020.1 shown and described. Further, common elements and common features of related elements are drawn in the same manner in different figures, and/or use the same symbology in different figures. As such, it is not necessary to describe the features of 1020.1 and 20.1 that are the same, since these common features are apparent to a person of ordinary skill in the related field of technology. This description convention also applies to the use of prime ('), double prime ("), and triple prime ("') suffixed element numbers. Therefore, it is not necessary to describe the features of 20.1, 20.1', 20.1 ", and 20.1"' that are the same, since these common features are apparent to persons of ordinary skill in the related field of technology.

Although various specific quantities (spatial dimensions, temperatures, pressures, times, force, resistance, current, voltage, concentrations, wavelengths, frequencies, heat transfer coefficients, dimensionless parameters, etc.) may be stated herein, such specific quantities are presented as examples only, and further, unless otherwise noted, are approximate values, and should be considered as if the word "about" prefaced each quantity. Further, with discussion pertaining to a specific composition of matter, that description is by example only, and does not limit the applicability of other species of that composition, nor does it limit the applicability of other compositions unrelated to the cited composition.

Various embodiments of the present invention pertain to internal permanent magnet machines in which the permanent magnets contain at least two materials having different magnetic properties. One of the materials is selected to have relatively lower magnetic performance at higher temperatures, and the other material is selected to have higher magnetic performance at higher temperatures. In yet other embodiments one of the materials is selected to have relatively higher magnetic performance at lower temperatures, and the other material is selected to have relatively higher magnetic performance at higher temperatures. In providing dual material magnets of this type, the cost and complexity of the IPM can be reduced by providing the higher temperature (and often more expensive) material only in those locations in the magnetic field where it is most needed, and using the lower temperature (and sometimes less expensive) material only in those locations in the magnetic field where it can be used within the operating parameters of the motor.

Various embodiments include various methods for fabricating these dual-material or "hybrid" permanent magnets. For example, in some embodiments the dual-property, dual-material magnet is fabricated separately in multiple pieces, and then joined together, such that their placement within a rotor is as a single, integrated or unitary magnet. This joining can be accomplished by adhesives, fasteners, or joining fixtures. In the latter case, the joining fixtures can be bands that extend around the joined pair, spring clips that attach to pairs at the edges, or the like.

In yet other embodiments, these dual-material magnets can be fabricated by the application of a magnetic characteristic-changing material around a certain portion of a magnet. As one example, the present invention contemplates the doping of a rare earth material on those portions of the magnets that benefit from having higher magnetic performance at elevated temperature. Likewise, this rare earth material is typically not applied, or is applied in lesser amounts, to other portions of that magnet that do not require higher performance at elevated temperature. Further, although various embodiments pertain to the addition of rare earth materials such as dysprosium or neodymium, it is understood that this is by way of reference only, and not intended to be limiting. Yet other embodiments of the present invention pertain to the application on certain, selected portions of the magnet of any element or composition known to enhance magnetic characteristics.

Still further, it is understood that the arrangement of these dual-composition magnets within slots of the rotor are shown herein by way of non-limiting examples only. In some embodiments, the portion of the magnet with higher magnetic performance at elevated temperatures may occur at the radially-outmost location of the rotor slots, whereas in other types of motors it may be beneficial to have these same magnets oriented with the higher temperature material at the radially-innermost location. It is appreciated that the most cost effective use of the dual-composition, dual-magnetic property magnets can depend upon various parameters within the purview of the motor designer. For example, the cooling schemes of different motors will affect temperatures that the rotor magnets are exposed to. Various embodiments envision the use of the more expensive, elevated temperature material at those locations where there combination of rotor temperature and surrounding magnetic field make it most logical.

In some of the discussion that follows, there will be reference to motors containing multiple pairs of magnets, each multiple pair being placed relative to a radially-extending centerline of the rotor. Some of these configurations may be shown as pairs of nested V-shapes about each of a different plurality of centerlines. It will be understood by those of ordinary skill in the art that many of the comments applying to these pairs of nested V-shapes are likewise applicable to those configurations of the dual material permanent magnets in which there is a single V-shape or any shape established about a corresponding centerline.

What will be shown and described herein, along with various embodiments of the present invention, is discussion of one or more tests that were performed. It is understood that such examples are by way of examples only, and are not to be construed as being limitations on any embodiment of the present invention. It is understood that embodiments of the present invention are not necessarily limited to or described by the mathematical analysis presented herein.

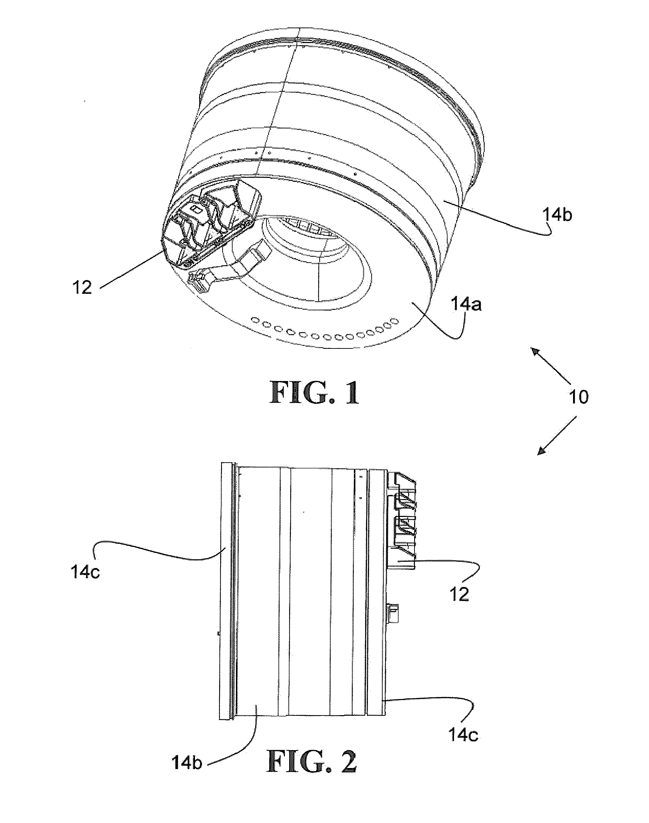

FIGS. 1 and 2 show exterior views of an internal permanent magnet (IPM) electric machine 10 according to one embodiment of the present invention. Machine 10 is preferably a motor such as those used to provide motive power to hybrid vehicles, although other embodiments of the present invention contemplate usage in any type of application. Exterior features of motor 10 include an end cap 14a, sleeve 14b, and endplate 14c that provide a protective covering for the internal features of the motor. A terminal block 12 is adapted and configured to provide three phase electrical power to motor 10.

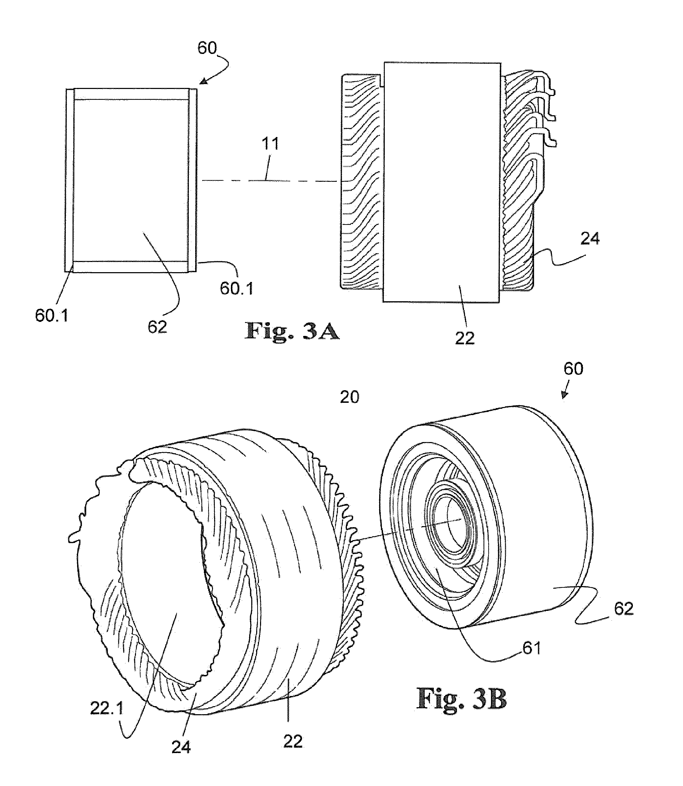

FIGS. 3A and 3B show simplified schematic exploded views of the stator 20 and rotor 60 contained within sleeve 14B. Stator 20 includes a laminate assembly 22 comprising a plurality of stacked plates of substantially identical configurations. An electrical conductor assembly 24 provides distributed three-phase electrical power within the annulus defined by laminate assembly 22. Rotor assembly 60 includes a laminate assembly 62 that includes a plurality of stacked, substantially identical individual laminate plates. These plates are coupled to a hub 61 that provides support for laminate assembly 62, as well as providing motive power to a rotating component, such as an input shaft of a transmission or other machine. Rotor 60 is supported by bearings (not shown) and rotates within stator 20 about a rotational axis 11.

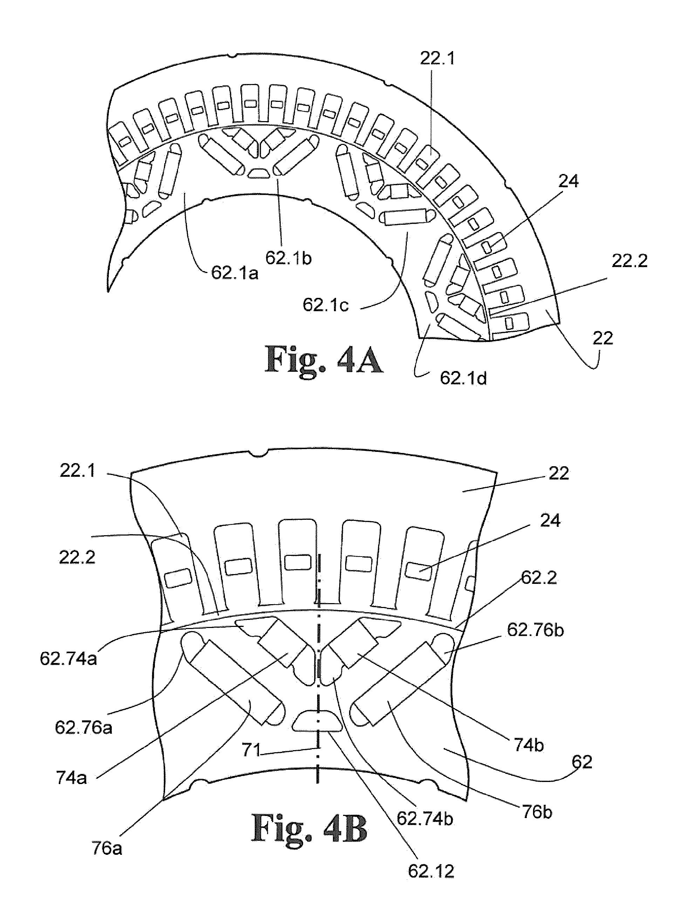

FIGS. 4A and 4B are cross sectional representations of portions of stator 20 and rotor 60, the cross sections being normal to centerline 11. FIG. 4A shows a quadrant of the assembled rotor 60 within stator 20. Each of the plates of laminate assembly 22 includes a plurality of slots 22.1 that are equally distributed about the inner circumference of assembly 22. Each of the slots contains a plurality of electrical conductor assemblies 24 that provide a three-phase, rotating magnetic field about the outer diameter of rotor 60 during operation. For the sake of simplicity, only a single conductor 24 is shown within each slot 22.1.

FIG. 4A shows portions of four groups of pockets 62.1 that are fabricated into each of the individual plates of the laminate assembly 62. The four groups 62.1a, 62.1b, 62.1c, and 62.1d are equally spaced about the periphery 62.2 of rotor 60. FIGS. 4A and 4B show that the groups 62.1 are generally in the shape of a V, and with the legs of the V preferably having an included angle ranging from about eighty degrees to about one hundred and twenty degrees.

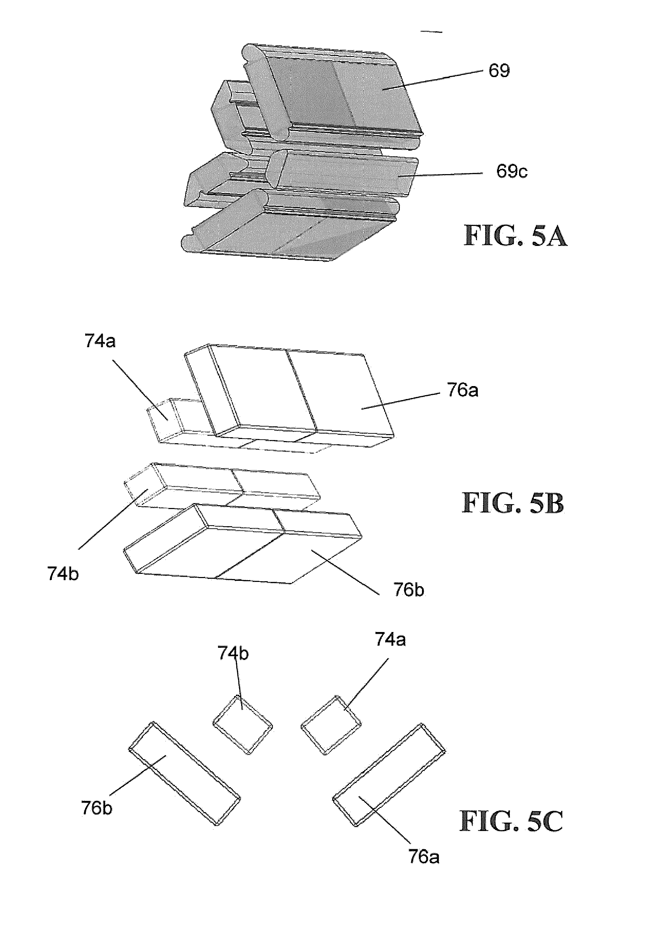

FIG. 4B is a close-up of a single group of pockets 62.1. Each laminate plate defines a plurality of pockets 62.1 for each grouping of magnets. In some embodiments, a grouping 62.1 includes two pair of pockets 62.1 that are arranged symmetrically about a group centerline 71. Some but not necessarily all of these pockets are adapted and configured to contain within them a permanent magnet. An outer pair of permanent magnets 74a and 74b are contained within corresponding pockets 62.74a and 62.74b. An inner pair of permanent magnets 76a and 76b is also located symmetrically about axis 71. In some embodiments, laminate assembly 62 further includes a central pocket 62.12 located between longitudinal edges of magnets 76a and 76b. The various magnet-containing slots 62 preferably have shapes adapted and configured to contain a corresponding permanent magnet as well as a plastic casing 69 (referring to FIG. 5A). A plastic member 69c is located within pocket 62.12.

Referring back to FIG. 4B, permanent magnets 74 and 76 can be of any shape, although in some embodiments the magnets are formed into substantially rectangular shapes (as also shown in FIGS. 5B and 5C) for ease of fabrication and assembly. In some embodiments, the outer pair of permanent magnets 74 and the inner pair of magnets 76 have lengths that are substantially the same and substantially run the full longitudinal extent of laminate assembly 62. The height and the width of the magnets 74 and 76 can be of any dimension at the discretion of the designer.

In some embodiments of the present invention, the cross sectional shape of the outer pair 74 is adapted and configured for permanent magnets fabricated from a first material composition. Further, the cross sectional shape of the inner pair 76 of permanent magnets is adapted and configured for magnets fabricated from a second composition of material. In some embodiments of the present invention the first material composition and the second material composition both include one or more rare earth elements, although other embodiments of the present invention are not so limited and contemplate the first and second materials being any type of compositions suitable for service for permanent magnets. Preferably, each magnet of the outer pair 74 has a volume that is substantially less than the volume of a corresponding inner magnet 76. In some embodiments, each outer magnet is less than about one-half the volume of an inner magnet. However, various embodiments of the present invention contemplate inner magnets 74 that are substantially the same size and/or shape as magnets 76. Further, yet other embodiments contemplate inner magnets 74 having substantially the same volume and mass as magnets 76, although other embodiments of the present invention are not so constrained, and contemplate magnets 74 that are different or larger than magnets 76 in either shape or volume.

In some embodiments of the present invention, the outer pair 74 are adapted and configured (such as with regards to shape, volume, and location) to be constructed of a material that is different than the material selected for inner pair 76. Inner pair 76 are adapted and configured for fabrication from a material having different property than the material used for fabrication of pair 74. It has been found that the outer pair 74 of magnets are more susceptible to demagnetization during operation since the outer pair 74 is more effectively flux-linked to the rotating magnetic field of stator 20.

In those embodiments in which the outer magnets are physically smaller than the inner magnets, and further in those in which the outer magnets are located more closely to outer diameters 62.2 of laminate assembly 62, the magnetic surface flux density to which the outer pair 74 of magnets is exposed can be substantially less than the magnetic surface flux density to which the inner pair 76 of magnets is exposed. It has been found that the difference in flux density between the inner pair 76 and the outer pair 74 is sufficiently great enough, especially for conditions of high current flow in conductors 24, to accommodate an outer pair 74 fabricated from a first material composition 102, and the inner pair 76 being fabricated from a different magnetic material composition 104. In some embodiments, it is therefore possible to fabricate the inner pair 76 of magnets from a material 104 that demagnetizes at a higher magnetic flux B(T) than the material 102 chosen for outer pair 74, at a given temperature. The material 102 of the outer pair can be fabricated from a material 102 that, in comparison to a different material 104, that offers overall lower magnetic performance.

An additional aspect of some embodiments of the present invention is that the material 102 chosen for fabrication of the outer pair 74 magnets, in comparison to a material 104 chosen for fabrication of the inner pair 76 of magnets, preferably has better high temperature characteristics. Yet another aspect of some embodiments is that the outer pair 74 of magnets uses less material than the inner pair 76. In those embodiments combining one or more of the aforementioned aspects, it is possible to limit the use of a more expensive material 102 to the smaller outer pair 74, and use a less expensive material 104 for the inner pair 76, with the result that not only is the grouping of inner and outer pairs overall less expensive, but further overall more resistant to demagnetization.

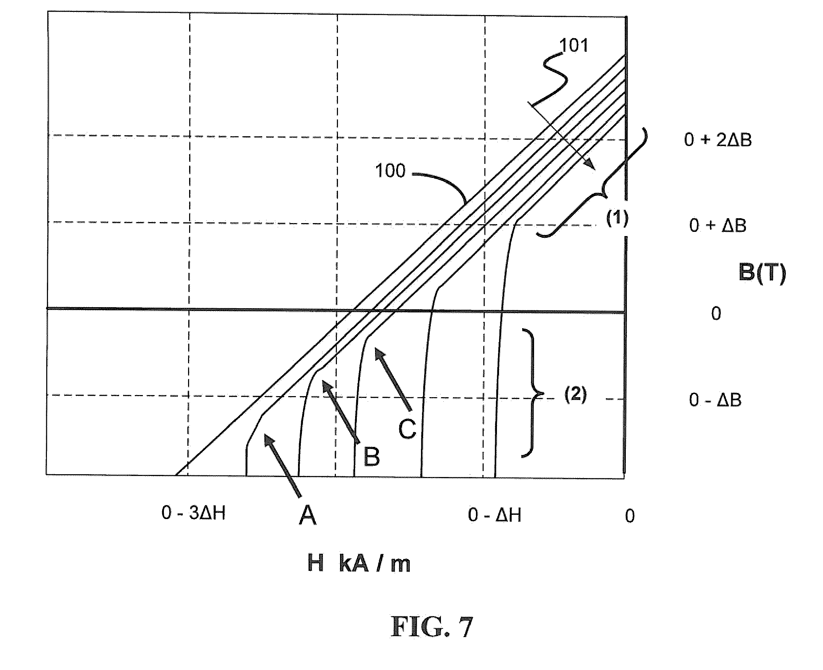

FIG. 7 is a graphical representation of magnetic characteristics of a material. FIG. 7 shows the magnetic flux density in Tesla as a function of magnetic field strength in kiloamps per meter. FIG. 7 shows a family 100 of six material characteristics, with each line of the plot representing a different material temperature. Arrow 101 shows the direction of increasing temperature across the family. It can be seen that five of the constant temperature lines can be characterized as having three regions of response: (1) a region having a linear relationship of flux density as a function of field strength, especially as field strength approaches zero; (2) a region at levels of field strength in which the flux density is substantially vertically asymptotic; and (3) a transition or "knee" between regions (1) and (2).

FIG. 7 shows a line of lowest material temperature in which there is a linear relationship (with positive slope) for the entire graphical range from a field strength of -3 delta H to a field strength of 0. A second plot at the next highest material temperature shows a knee characteristic A at a field strength of about -2.5 delta H. The next highest temperature line (the third, going from left to right) shows a knee characteristic B at about -2.2 delta H. The fourth constant temperature line shows a knee characteristic C occurring at a field strength of about -.8 delta H. The highest temperature line within family 100 shows a knee characteristic at about -.75 delta H. The knee characteristics represent a transition from a useful range of magnetic properties (i.e., range (1) in which the magnetic characteristics are useful for providing motive power) and a range in which the magnetization of the material is possible (i.e., range (2) which is nearly vertical). IPM machines operating within region (2) can experience partial or complete demagnetization of the rotor magnets.

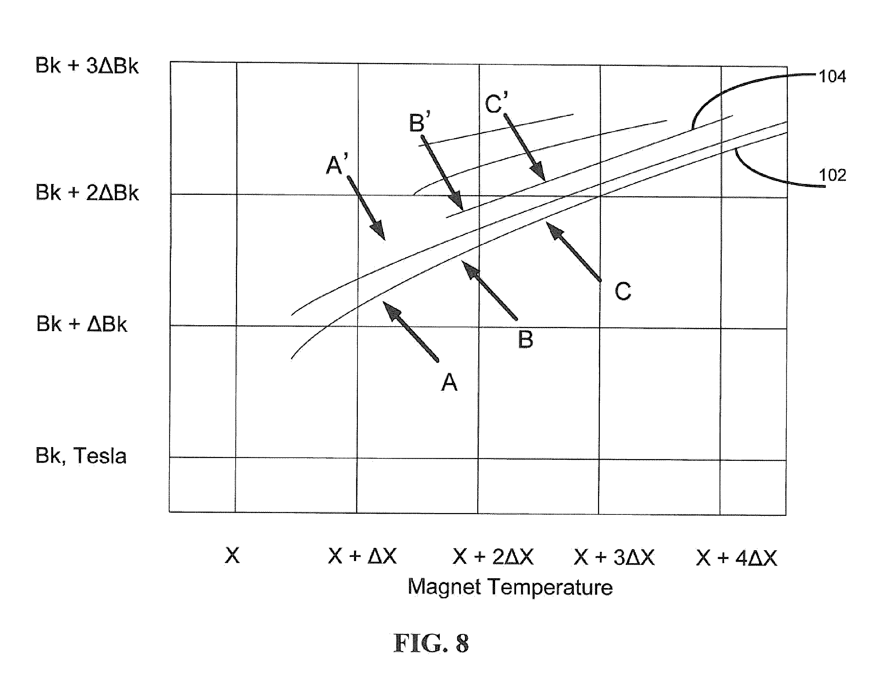

FIG. 8 is a graphical representation of some of the information of FIG. 7, combined with similar data corresponding to different material types. FIG. 8 shows a family of plots that represent the transitional magnetic flux density of a material as a function of material temperature. FIG. 8 includes in line 102 representing the locus of points that present knee characteristics at a variety of temperatures, and further after application of a smoothing algorithm to interpolate between values. The knee data points A, B, and C of a first material are shown on curve 102 along with demagnetization flux density knees at other temperatures as well. In one embodiment material 102 represents a rare earth magnet including quantities of neodymium, dysprosium, iron and boron. FIG. 8 also shows a characteristic of a material 104 having different properties. FIG. 8 identifies points A', B', and C' that identify the knee characteristics for material 104 at the same temperatures identified for material 102. In some embodiments, material 104 is also a rare earth permanent magnet including quantities of neodymium, dysprosium, iron and boron, although preferably in different percentages or with different processing than material 102. FIG. 8 shows that at any particular temperature, a magnet fabricated from material 104 encounters a demagnetization knee transition at a higher flux density than a magnet fabricated from material 102.

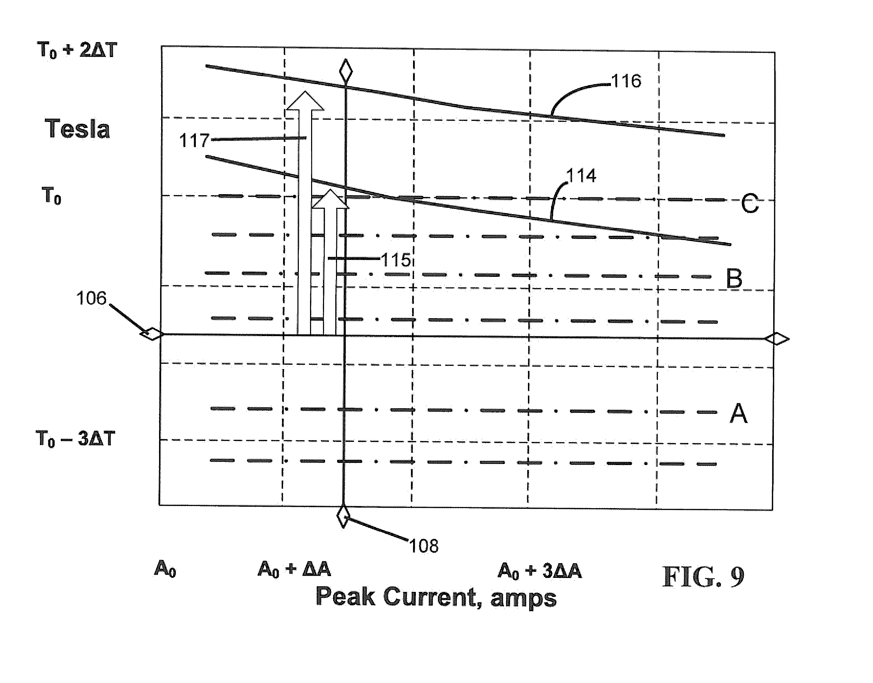

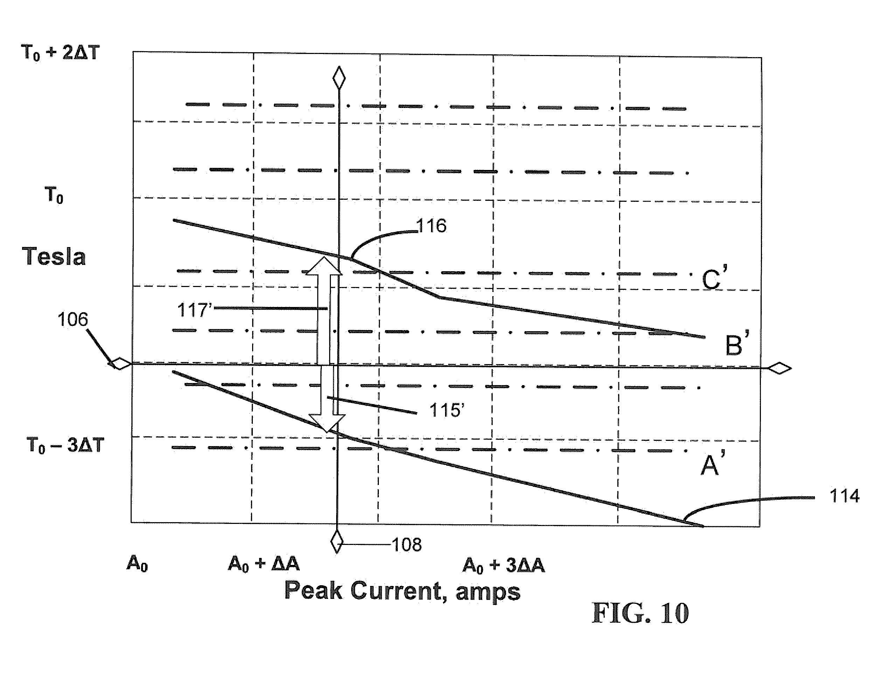

FIGS. 9 and 10 are graphical representations of magnetic flux density as a function of stator current, for materials 102 and 104, respectively. Each of these two figures includes a knee characteristic at predetermined design temperature 106 that plots as a straight line of constant flux density. These figures also include a predetermined design stator current 108 that plots as a vertical line. In some embodiments, temperature line 106 relates to a maximum continuous temperature, and design characteristic 108 relates to a maximum peak stator current.

FIGS. 9 and 10 also show the flux densities encountered by the magnet pairs as a function of stator current. Line 114 represents the flux density versus current characteristic for outer pair 74 of rotor magnets. Curve 116 represents the flux density encountered by the inner pair 76 of magnets as a function of stator current. Curves 114 and 116 in some embodiments are established by analytical models of motor 10, although various embodiments of the present invention contemplate the plotting of outer pair characteristics 114 and inner pair characteristics 116 as developed or measured by any method.

FIGS. 9 and 10 further show families of temperature plots for the transition or knee demagnetization characteristic of the corresponding material. FIG. 9 shows a family of substantially horizontal lines (represented by double dashes separated by a dot) that represent the flux demagnetization knee as a particular temperature. Points A, B, and C, respectively, from curve 102 of FIG. 8 each plot as a line A, B, or C respectively, on FIG. 9. Likewise, FIG. 10 includes material characteristics from alternate material 104, with knee characteristics A', B', and C' being plotted at as substantial horizontal lines A', B', and C', respectively, on FIG. 10.

Each of FIGS. 9 and 10 include arrows 115 and 117, respectively, which indicate a type of design margin relative to demagnetization of outer and inner pairs 74 and 76, respectively. Referring first to FIG. 9, it can be seen that at the peak current 108, that the magnetic flux density 114 of outer pair 74 is spaced above the design temperature 106, represented by arrow 115. Therefore, when outer pair 74 of magnets are operating at the temperature represented by limit 106, and further when the stator is provided with current represented by limit 108, that the magnets will be operating in region (1) of FIG. 7, and therefore have a design margin that makes demagnetization of outer pair 74 unlikely. For an inner pair 76 of magnets fabricated from the same material 102, arrow 117 represents an even greater margin protecting against demagnetization under temperature condition 106 and current condition 108.

Referring to FIG. 10, the same current and flux density characteristics 114 and 116 are shown superimposed over the characteristics of a second, different material 104. Current rating 108 and temperature ratings 106 are the same on FIG. 10 as for FIG. 9. However, it can be seen that with material 104, that the outer pair 74 of magnets will have a negative design margin as represented by arrow 115'. Under these operating conditions of temperature ratings 106 and current rating 108, outer pair 74 are operating at a temperature that is higher than the corresponding demagnetization knee for material 104. Therefore, there is a greater likelihood that magnet pair 74 will become demagnetized when motor 10 operates under temperature and current conditions 106 and 108, respectively. However, a pair of magnets 76 fabricated from material 104 show a positive design margin 117' at the rated conditions. Therefore, a pair 76 of magnets fabricated from material 104 is less likely to demagnetize under these operating conditions. However, pair 74 of magnets can be fabricated from material 102, as discussed with regard to FIG. 9, in order for pair 74 to have a positive demagnetization design margin.

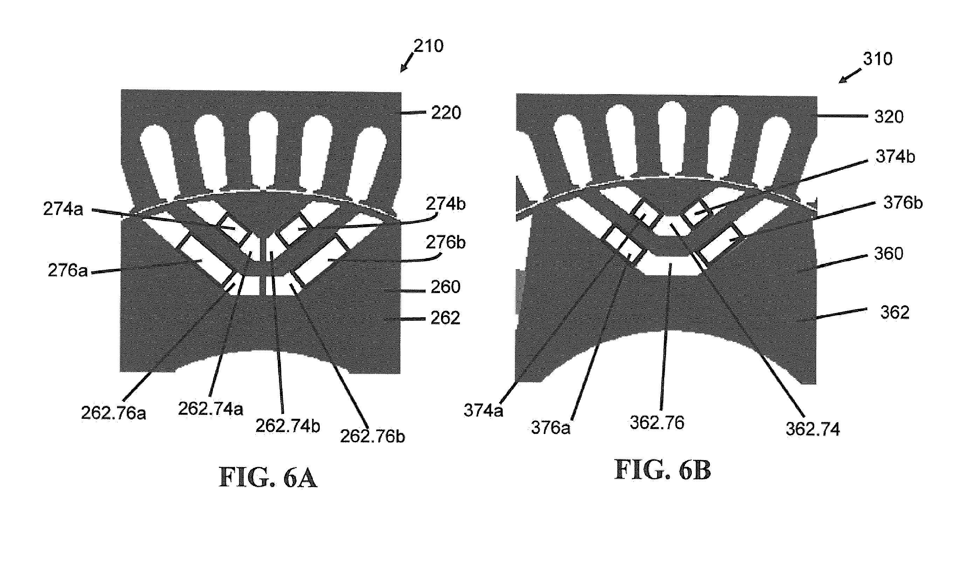

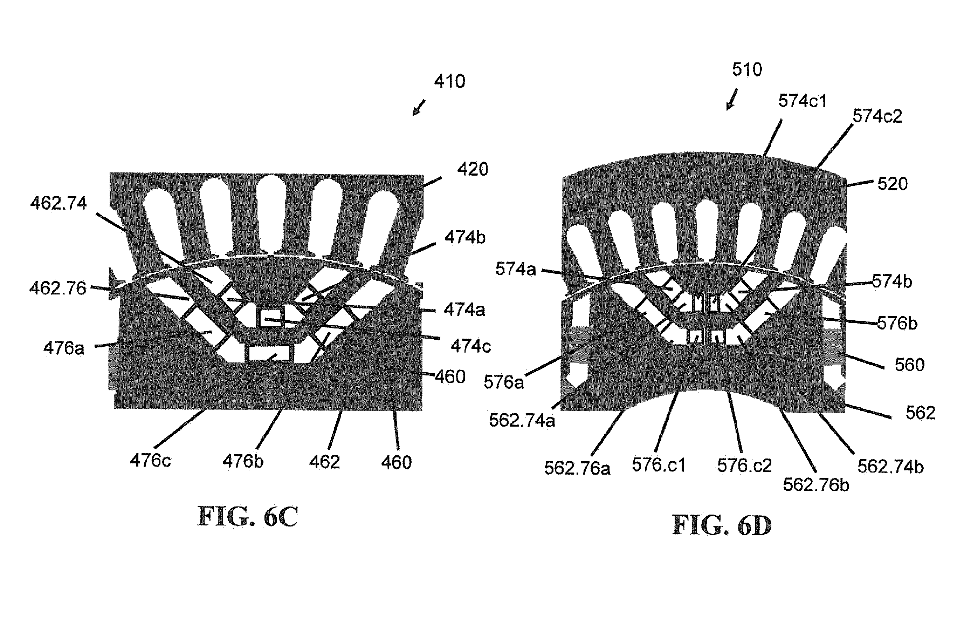

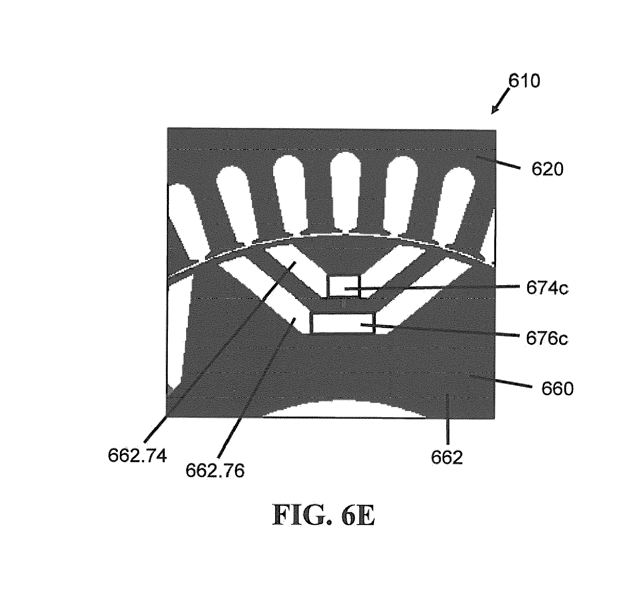

FIGS. 6A, 6B, 6C, 6D, and 6E show arrangements of inner and outer magnets according to other embodiments of the present invention.

FIG. 6A is cross sectional representation of a portion of a motor 210 according to another embodiment of the present invention. Motor 210 includes a rotor 260 that is rotatably supported by and within a stator 220. FIG. 6A shows pockets within the laminate assembly 222 of stator 220, it being understood that these pockets are adapted and configured to contain conductor assemblies for providing three-phase power.

The laminate assembly 262 of rotor 260 defines a plurality of pockets 262.74a, 262.74b, 262.76a, and 262.76b that are fabricated into each plate of the laminate assembly, and which extend the longitudinal length of rotor 260. These pockets are preferably arranged such that a dividing wall of laminate plate material is located between adjacent pockets 262.74a and 262.74b, and further between pockets 262.76a and 262.76b.

An outer pair of permanent magnets 274a and 274b are located within their respective pockets. An inner pair of 276a and 276b are located within their respective pockets. Preferably, the magnets are received within their respective pockets such that there is open space in the pockets on each side of the magnets, this open space being unfilled in some embodiments and filled with a plastic material in other embodiments. Preferably, each of the magnets 274a and 274b are of substantially similar shape and size, and further magnets 276a and 276b are of substantially the same shape and size. Preferably, each magnet 274 has a smaller volume than either of the inner magnets 276. In some embodiments, outer magnets 274 are fabricated from a first magnetic material, and inner magnets 276 are fabricated from a second, different material, such that the first material has magnetic properties in relation to the second material in a manner similar to the previous discussion of the properties of material 102 relative to material 104.

FIG. 6B is cross sectional representation of a portion of a motor 310 according to another embodiment of the present invention. Motor 310 includes a rotor 360 that is rotatably supported by and within a stator 320. FIG. 6B shows pockets within the laminate assembly 322 of stator 320, it being understood that these pockets are adapted and configured to contain conductor assemblies for providing three-phase power.

The laminate assembly 362 of rotor 360 defines a plurality of pockets 362.74 and 362.76 that are fabricated into each plate of the laminate assembly, and which extend the longitudinal length of rotor 360. In some embodiments, pockets 362.74 and 362.76 are each single, continuous pockets, and further preferably with a centrally located region suitable as unfilled space.

An outer pair of permanent magnets 374a and 374b are located within their respective pockets. An inner pair of 376a and 376b are located within their respective pockets. Preferably, the magnets are received within their respective pockets such that there is open space in the pockets on each side of the magnets, this open space being unfilled in some embodiments and filled with a plastic material in other embodiments. Preferably, each of the magnets 374a and 374b are of substantially similar shape and size, and further magnets 376a and 376b are of substantially the same shape and size. Preferably, each magnet 374 has a smaller volume than either of the inner magnets 376. In some embodiments, outer magnets 374 are fabricated from a first magnetic material, and inner magnets 376 are fabricated from a second, different material, such that the first material has magnetic properties in relation to the second material in a manner similar to the previous discussion of the properties of material 102 relative to material 104.

FIG. 6C is cross sectional representation of a portion of a motor 410 according to another embodiment of the present invention. Motor 410 includes a rotor 460 that is rotatably supported by and within a stator 420. FIG. 6C shows pockets within the laminate assembly 422 of stator 420, it being understood that these pockets are adapted and configured to contain conductor assemblies for providing three-phase power.

The laminate assembly 462 of rotor 460 defines a plurality of pockets 462.74 and 462.76 that are fabricated into each plate of the laminate assembly, and which extend the longitudinal length of rotor 460. In some embodiments, pockets 462.74 and 462.76 are each single, continuous pockets, and each further preferably including a centrally located permanent magnets 474c and 476c, respectively.

An outer plurality of permanent magnets 474a, 474b, and 474c are located within their respective portion of pocket 462.74. An inner plurality of 476a, 476b, and 476c are located within their respective portion of pocket 462.76. Preferably, the magnets are received within their respective pockets such that there is open space in the pockets on each side of the magnets, this open space being unfilled in some embodiments and filled with a plastic material in other embodiments. Preferably, each of the magnets 474a, 474b, and 474c are of substantially similar shape and size, and further magnets 476a, 476b, and 476c are of substantially the same shape and size, but it is further contemplated that the centrally located magnets 474c and 476c may be of different sizes and configurations than other magnets within their grouping. Preferably, each magnet 474 has a smaller volume than either of the inner magnets 476. In some embodiments, outer magnets 474 are fabricated from a first magnetic material, and inner magnets 476 are fabricated from a second, different material, such that the first material has magnetic properties in relation to the second material in a manner similar to the previous discussion of the properties of material 102 relative to material 104.

FIG. 6D is cross sectional representation of a portion of a motor 510 according to another embodiment of the present invention. Motor 510 includes a rotor 560 that is rotatably supported by and within a stator 520. FIG. 6D shows pockets within the laminate assembly 522 of stator 520, it being understood that these pockets are adapted and configured to contain conductor assemblies for providing three-phase power.

The laminate assembly 562 of rotor 560 defines a plurality of pockets 562.74a, 562.74b, 562.76a, and 562.76b that are fabricated into each plate of the laminate assembly, and which extend the longitudinal length of rotor 560. These pockets are preferably arranged such that a dividing wall of laminate plate material is located between adjacent pockets 562.74a and 562.74b, and further between pockets 562.76a and 562.76b.

An outer pair of permanent magnets 574a and 574c1 are located within their pockets, and another pair of magnets 574b and 574c2 are located within their pockets. An inner pair 576a and 576c1 are located within their pocket, and 576b and 576c2 are located within their pocket. Preferably, the magnets are received within their respective pockets such that there is open space in the pockets on each side of the magnets, this open space being unfilled in some embodiments and filled with a plastic material in other embodiments. In some embodiments the centrally located magnets 574c1 and 574c2 are located on either side of a central dividing wall, and centrally located magnets 576c1 and 576c2 are located on either side of a dividing wall.

Preferably, each of the magnets 574a and 574b are of substantially similar shape and size, and further magnets 576a and 576b are of substantially the same shape and size. In some embodiments magnets 574c1 and 574c2 are of the same size, and each is smaller than central magnets 576c1 and 576c2, which are also of the same size. In some embodiments, outer magnets 574 are fabricated from a first magnetic material, and inner magnets 576 are fabricated from a second, different material, such that the first material has magnetic properties in relation to the second material in a manner similar to the previous discussion of the properties of material 102 relative to material 104.

FIG. 6E is cross sectional representation of a portion of a motor 610 according to another embodiment of the present invention. Motor 610 includes a rotor 660 that is rotatably supported by and within a stator 620. FIG. 6E shows pockets within the laminate assembly 622 of stator 620, it being understood that these pockets are adapted and configured to contain conductor assemblies for providing three-phase power.

The laminate assembly 662 of rotor 660 defines a plurality of pockets 662.74 and 662.76 that are fabricated into each plate of the laminate assembly, and which extend the longitudinal length of rotor 660. In some embodiments, pockets 662.74 and 662.76 are each single, continuous pockets, and further preferably with a centrally located region suitable for use with a permanent magnet.

An outer permanent magnet 674c is located within its respective pocket. An inner magnet 676cis located within its respective pocket. Preferably, the magnets are centrally received within their respective pockets such that there is open space in the pockets on each side of the magnets, this open space being unfilled in some embodiments and filled with a plastic material in other embodiments. Preferably, magnet 674c has a smaller volume than the inner magnet 676c. In some embodiments, outer magnet 674c is fabricated from a first magnetic material, and inner magnets 676c is fabricated from a second, different material, such that the first material has magnetic properties in relation to the second material in a manner similar to the previous discussion of the properties of material 102 relative to material 104.

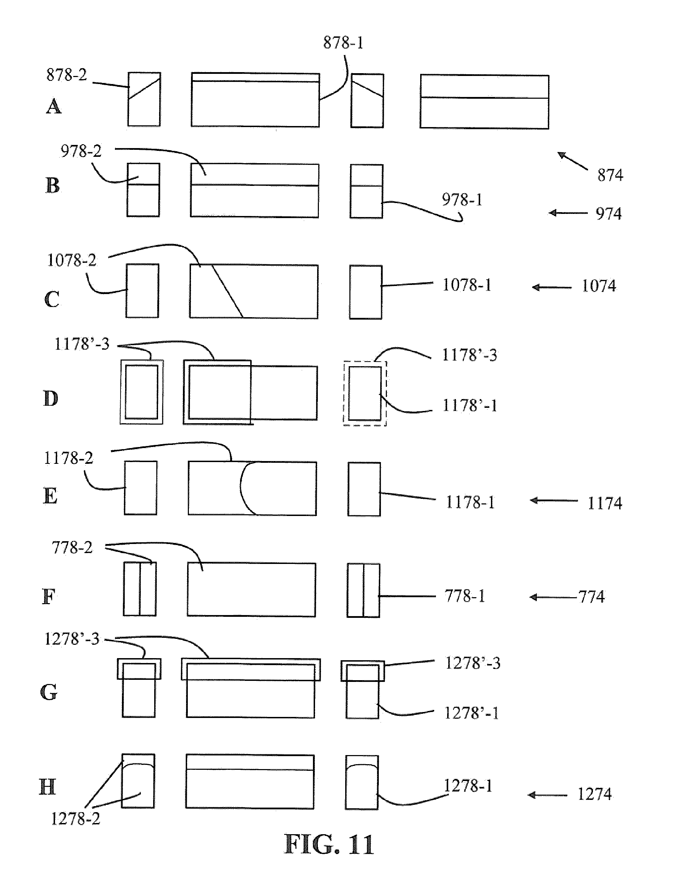

FIGS. 11, 12, and 13 depict various aspects of permanent magnets used in electrical machines including internal permanent magnet (IPM) and surface permanent magnet (SPM) rotors of electrical motors.

As previously discussed, there are tradeoffs involved in the selection and configuration of permanent magnets in IPM and SPM machines. As one example, materials that provide improved magnetic flux levels and/or coercivity at elevated temperatures can be more expensive than materials having similar properties at lower temperatures. Further, some materials (such as dysprosium) have relatively few commercial sources, which generally leads to increased prices and/or erratic availability.

In some embodiments of the present invention, different compositions of rare earth materials are combined in one piece magnets used in single barrier permanent magnet rotors. In some embodiments the unitary magnet includes distinctly different materials that have been joined or processed into a single piece. In yet other embodiments a permanent magnet is doped in certain selected regions with compositions (such as those including dysprosium), with that doping material subsequently processing into the base material, so as to provide a single piece magnet with a variable composition. Permanent magnets according to some embodiments of the present invention have more than one distinct B-h curve within a single magnet, such that there are different levels of magnetic flux (B) and coercivity (h) in different regions of the magnets.

In some embodiments, the various regions of the magnet are made separately, and then physically joined. This physical joining can be by various methods, including by use of adhesives, fasteners, and by joining fixtures. In yet other embodiments the multiple grades of magnetic material are joined together during processing of the magnet material. For example, different layers of magnetic power can be placed into a mold, each layer containing different compositions of materials. The layered powder can then be compressed to form a one-piece, solid magnet having different regions. In yet other embodiments, a magnet can be produced by regular methods, and subsequently portions of the magnet could be coated in various doping materials (such as those including dysprosium). These doped regions are then subsequently processed to diffuse the doping material into the magnet material.

FIGS. 11A, B, C, and F show various configurations of permanent magnets 874, 974, 1074 and 774, respectively, in which two regions of different permanent magnet materials (x78-1 and x78-2) are formed into a single, unitary magnet. In all of these examples, the two different magnetic materials are identified with a -1 representing material of a lower magnetic flux, and with a -2 for material of a higher magnetic flux. It is further understood that the -1 designation can represent material having a lower coercivity, and the -2 material can represent a different material having a higher coercivity. In these examples there can be a distinct separation line between the two different regions of material. This separation line can represent an adhesive layer or a separation between layers of different magnetic powder, as examples.

FIG. 11A shows four orthogonally arranged views of a magnet 874 having a region of higher magnetic flux material 878-2 located on a corner of a multigrade magnet 878. In some embodiments, the separation line between regions 878-1 and 878-2 corresponds generally to a constant radius of a rotor in which magnet 874 is used. When installed, the region 878-2 of higher magnetic flux extends generally parallel with the axis of the rotor.

FIG. 11B shows a magnet 974 of similar construction to magnet 874, except that the separation line between regions 978-2 and 978-1 is generally orthogonal to the outer boundaries. The configuration of magnet 974 can be useful in those applications in which the -2 and -1 layers of material are laid in a mold, and subsequently pressed and heated into the final shape. FIG. 11F shows a magnet 774 of similar construction to magnet 974, except that the separation line between the -2 and -1 materials is arranged to have a longitudinal face of -2 material arranged to generally face the stator when installed. A configuration such as magnet 774 may be useful in SPM applications.

FIG. 11C depicts a multigrade magnet 1074 in which the separation between the -2 and -1 materials is oriented such that the magnetic flux levels of the installed magnet 1074 vary along the length of the rotor axis.

FIGS. 11D and 11E schematically represent a multigrade magnet 1174 that is fabricated by a diffusion process. FIG. 11D shows a magnet of uniform material 1178'-1. A coating of material 1178'-3 is placed around one end of magnet 1174'. This -3 material can be a material that includes a level of dysprosium that is higher than the level within the -1 material. After a suitable diffusing process (such as one including increased temperature or pressure) the -3 doping material is distributed within an end of magnet 1178 to form a region 1178-2 that has a level of magnetic flux that is higher than the undoped region 1178-1. In some embodiments, it is expected that the magnetic flux levels of the completed magnet 1174 will vary uniformly from left to right (with reference to the central side view of FIG. 11E). FIGS. 11G and 11H depict a configuration of magnet 1274 similar to that of magnet 1174, except with the doping material 1278'-3 being located along an edge of magnet 1274 that is generally parallel to the axis of the rotor.

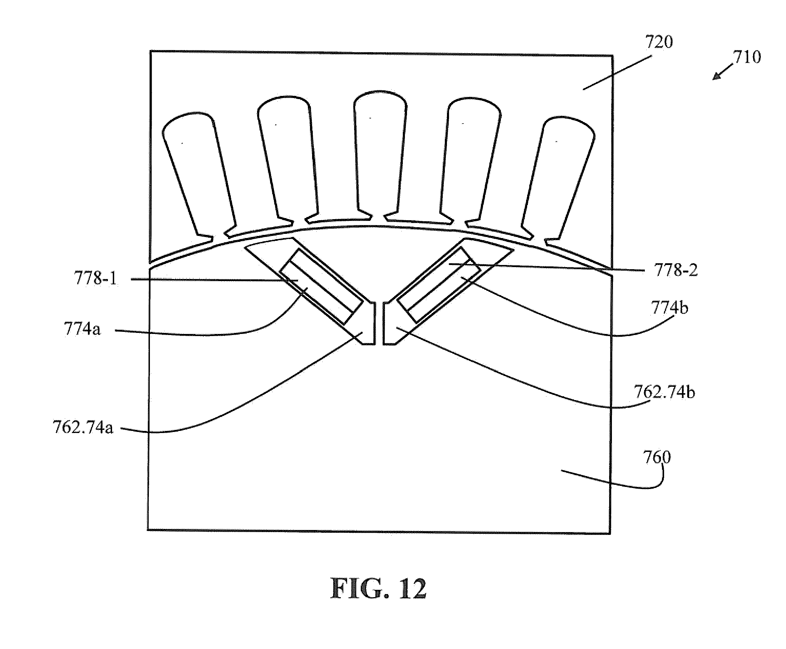

FIG. 12 shows a pair of permanent magnets 774a and 774b arranged in a single barrier on a rotor 760 of a motor 710.

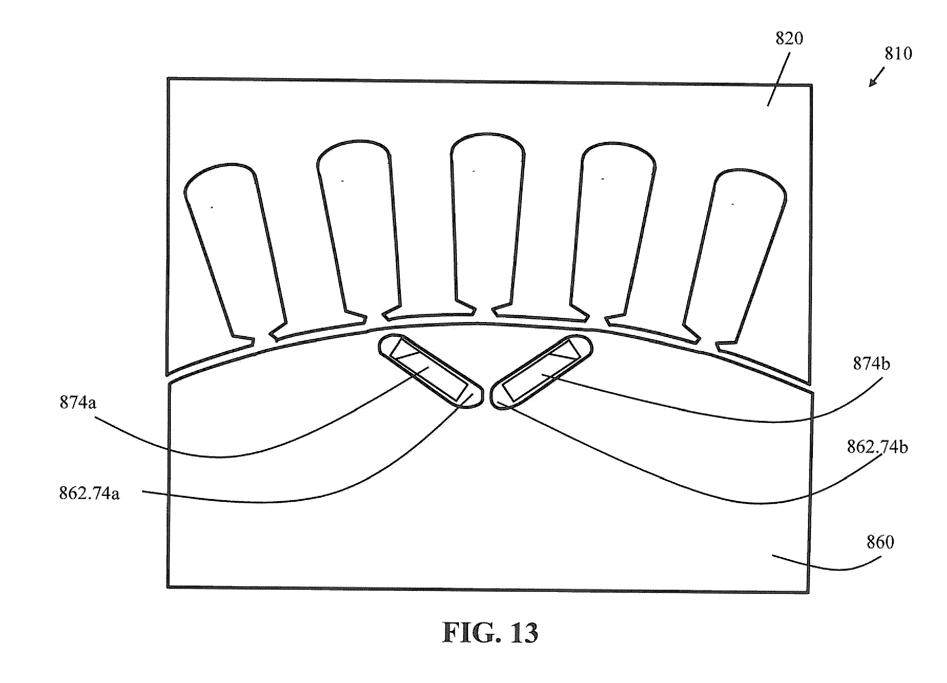

FIG. 13 shows a pair of permanent magnets 874a and 874b arranged in a single barrier on a rotor 760 of a motor 710.

Various aspects of different embodiments of the present invention are expressed in paragraphs X1 and X2, as follows:
X1. One aspect of the present invention pertains to a motor having a stator and a rotor having an outer diameter and being rotatable within by said stator. The rotor includes a plurality of permanent magnet pairs each magnet of each said pair having first and second regions. The material of the first region has a first demagnetization knee at a first flux density and a predetermined temperature, and the second region has a second demagnetization knee at a second flux density and the same predetermined temperature. Preferably the first flux density is less than the second flux density.
X2. Another aspect of the present invention pertains to a motor having a stator including a plurality of electrical conductors that carry a predetermined electrical current . The motor preferably includes a rotor being rotatable within the stator, the rotor including a plurality of permanent magnets, each magnet having a first region comprising a first material and a second region comprising a second material. The motor preferably includes the first region having a first magnetic flux density at the predetermined stator current, and the second region having a second magnetic flux density at the same predetermined stator current. Preferably, the first material having a first demagnetization flux density at a predetermined temperature, said second material having a second demagnetization flux density at the same predetermined temperature, wherein the first magnetic flux density is less than second demagnetization flux density and the second magnetic flux density is greater than the second demagnetization flux density.

Yet other embodiments pertain to any of the previous statement X1 or X2, which are combined with one or more of the following other aspects:

Wherein the first region includes a first amount of a rare earth, the second region includes a second amount of the rare earth, and the first amount is greater than the second amount.

Wherein the rare earth is neodymium or dysprosium.

Wherein the first region is doped with a rare earth and the second region is not doped with the rare earth, and/or the doped rare earth is diffused into the first region.

Wherein each magnet of each said pair is unitary, and/or the first region of each said magnet and the second region of each said magnet are made separately and joined into a unitary structure, and/or the first region and the second region are joined by adhesives, and/or the first region and the second region are joined by mechanical fasteners, and/or the first region and the second region are joined by a joining fixture.

Wherein the rotor includes a plurality of circumferentially-spaced apart pockets, wherein the magnets of each said pair are located in different pockets and/or the rotor includes a plurality of radially extending centerlines, each pocket being placed symmetrically relatively to the other pocket about a corresponding centerline.

Wherein each said pair of magnets or each pair of pockets are the only pair placed symmetrically about the corresponding centerline.

Wherein a portion of the first region of each said magnet is located further from the centerline than the second region of each said magnet.

Wherein a portion of the first region is located closer to the outer diameter than the second region.

Wherein the first flux density and the second flux density are each greater than the first demagnetization flux.

Wherein said first magnetic flux density is the normal component of magnetic surface flux density.

Wherein the predetermined current is the maximum peak current rating for the motor, and/or the predetermined temperature is about equal to or less than the maximum continuous temperature rating for the motor.

Wherein said rotor includes a plurality of radially extending centerlines, each magnet of a corresponding pair being located as a mirror image of the other magnet of the pair about a corresponding centerline.

Wherein each said pair is the only pair of permanent magnets placed symmetrically about the corresponding centerline.

Wherein a portion of the second region of each said magnet is located further from the centerline than the first region of each said magnet.

Wherein a portion of the first region is located closer to the outer diameter than the second region.

Wherein a portion of the second region is located closer to the outer diameter than the first region.

While the inventions have been illustrated and described in detail in the drawings and foregoing description, the same is to be considered as illustrative and not restrictive in character, it being understood that only certain embodiments have been shown and described and that all changes and modifications that come within the spirit of the invention are desired to be protected.

## Claims

1. An internal permanent magnet motor, comprising:
a stator including a plurality of electrical conductors; and
a rotor having an outer diameter and being rotatable within by said stator, said rotor including a plurality of permanent magnet pairs, each magnet of each said pair having first and second regions with different magnetic material characteristics;
wherein said first region having a first demagnetization knee at a first flux density and a predetermined temperature, said second region having a second demagnetization knee at a second flux density and the same predetermined temperature, and the first flux density is less than the second flux density.

2. The motor of claim 1 wherein the first region includes a first amount of a rare earth, the second region includes a second amount of the rare earth, and the first amount is greater than the second amount,
optionally wherein the rare earth is neodymium or dysprosium.

3. The motor of claim 1 wherein the first region is doped with a rare earth and the second region is not doped with the rare earth,
optionally wherein the doped rare earth is diffused into the first region,
optionally wherein the rare earth is neodymium or dysprosium.

4. The motor of any preceding claim wherein each magnet of each said pair is unitary.

5. The motor of claim 4 wherein the first region of each said magnet and the second region of each said magnet are made separately and joined into a unitary structure.

6. The motor of claim 5 wherein the first region and the second region are joined by adhesives, by mechanical fasteners or by a joining fixture.

7. The motor of any preceding claim wherein said rotor includes a plurality of circumferentially-spaced apart pockets having a pair of legs, wherein the magnets of each said pair are located in different legs of a corresponding said pocket.

8. The motor of any preceding claim wherein said rotor includes a plurality of radially extending centerlines, each magnet of a corresponding pair being located as a mirror image of the other magnet of the pair about a corresponding centerline optionally wherein each said pair is the only pair of permanent magnets placed symmetrically about the corresponding centerline,
optionally wherein each said pair is the first pair of permanent magnets placed symmetrically about the corresponding centerlines, and which further comprises a second plurality of permanent magnet pairs, each said pair being placed symmetrically about the corresponding centerlines.

9. The motor of claim 8 wherein each said pair is the only pair of permanent magnets placed symmetrically about the corresponding centerline.

10. The motor of any one of claims 7 to 9 a portion of the first region of each said magnet is located further from the centerline than the second region of each said magnet, or
wherein a portion of the second region of each said magnet is located further from the centerline than the first region of each said magnet.

11. The motor of any preceding claim wherein a portion of the first region is located closer to the outer diameter than the second region.

12. The motor of any preceding claim, wherein:
said plurality of electrical conductors are capable of carrying a predetermined electrical current proximate to an inner diameter; and
said rotor outer diameter being rotatable within the inner diameter of said stator,;
said first region having a first magnetic flux density at the predetermined stator current, said second region having a second magnetic flux density at the same predetermined stator current;
said first material having a first demagnetization flux density at a predetermined temperature, said second material having a second demagnetization flux density at the predetermined temperature; and
the first magnetic flux density is less than second demagnetization flux density and the second magnetic flux density is greater than the second demagnetization flux density.

13. The motor of claim 12 wherein the first flux density and the second flux density are each greater than the first demagnetization flux, optionally wherein said first magnetic flux density is the normal component of magnetic surface flux density.

14. The motor of claim 12 or claim 13 wherein the predetermined current is the maximum peak current rating for the motor, and/or wherein the predetermined temperature is about equal to or less than the maximum continuous temperature rating for the motor.

15. The motor of any preceding claim wherein a portion of the first region is located closer to the outer diameter than the second region or wherein a portion of the second region is located closer to the outer diameter than the first region.
